# EUROPÄISCHE PATENTSCHRIFT

(11) **EP 0 943 113 B1**
(45) Veröffentlichungstag und Bekanntmachung des Hinweises auf die Patenterteilung: **27.02.2002**
(21) Anmeldenummer: 97951829.7
(22) Anmeldetag: 05.12.1997
(51) Int. Cl.: G02B 21/00, G11B 7/14, G01B 11/24

(54) **ANORDNUNG ZUR SIMULTANEN POLYFOKALEN ABBILDUNG DES OBERFLÄCHENPROFILS BELIEBIGER OBJEKTE**
DEVICE FOR POLYFOCAL REPRESENTATION OF THE SURFACE PROFILE OF ANY GIVEN OBJECT
DISPOSITIF POUR LA PRESENTATION POLYFOCALE SIMULTANEE DU PROFIL SUPERFICIEL D'OBJETS QUELCONQUES

(30) Priorität: 05.12.1996 DE 19650391
(43) Veröffentlichungstag der Anmeldung: 22.09.1999
(73) Patentinhaber: Leica Microsystems Heidelberg GmbH, 68165 Mannheim (DE)
(72) Erfinder: ENGELHARDT, Johann,Dr., D-76669 Bad Schönborn (DE); ZAPF, Thomas,Dr., D-67346 Speyer (DE); ULRICH, Heinrich,Dr., D-69121 Heidelberg (DE)
(74) Vertreter: Naumann, Ulrich, Dr.-Ing.
(86) Internationale Anmeldenummer: DE9702851
(87) Internationale Veröffentlichungsnummer: WO9825171

(56) Entgegenhaltungen:
- EP-A- 0 327 425
- EP-A- 0 623 804
- WO-A-95/00871
- WO-A-96/27143
- DE-A- 3 741 910
- US-A- 5 248 876
- US-A- 5 526 338
- PATENT ABSTRACTS OF JAPAN vol. 010, no. 183 (P-472), 26.Juni 1986 & JP 61 032022 A (NIPPON KOGAKU KK), 14.Februar 1986,

## Beschreibung

Die Erfindung betrifft eine Anordnung zur simultanen polyfokalen Abbildung des Oberflächenprofils beliebiger Objekte, insbesondere zur Vermessung des Oberflächenprofils von Zähnen, mit einer Lichtquelle zur Beleuchtung des Objekts, einer Optik zur Fokussierung der von der Oberfläche des Objekts zurückkehrenden Lichtsignale, einem die Lichtsignale aufnehmenden Detektor und einem die detektierten Signale digitalisierenden und weiterverarbeitenden Prozessor. Des weiteren betrifft die Erfindung eine besondere Verwendung der erfindungsgemäßen Anordnung zum Lesen und Schreiben digitaler bzw. binärer Informationen von einem optischen Datenträger bzw. auf einen optischen Datenträger.

Grundsätzlich handelt es sich hier um eine Anordnung zur Vermessung von Oberflächen jedweder Art und jedweder Kontur, und zwar unter Nutzung der aus der Konfokalmikroskopie bekannten Technik. Aus der Praxis sind bereits unterschiedliche Anordnungen und Verfahren zur Oberflächenvermessung bekannt wie EP-A-623 804 zeigt.

So läßt sich beispielsweise mittels eines Lichtschnittsensors eine Lichtlinie auf das Objekt projizieren und mit einer CCD-Kamera unter einem Winkel beobachten. Die geometrische Verformung der Lichtlinie wird dabei gemessen. Aus dieser Verformung werden die Höhendifferenzen auf dem Objekt berechnet. Durch Verschiebung des Objekts unter dem Sensor - senkrecht zur Lichtlinie - und durch wiederholte Messung eines Profils läßt sich seriell die Oberflächenform vermessen beziehungsweise bestimmen.

Zwar handelt es sich bei dem Lichtschnittsensor um einen einfach aufgebauten und dabei robusten Sensor, jedoch führt die hier erforderliche Schrägbeleuchtung zu einer einseitigen Abschattung steiler Stellen. Dadurch entstehen Asymmetrien in der Abbildung beziehungsweise Ungenauigkeiten.
Des weiteren werden durch Streuung von Licht aus verschiedenen Tiefen beispielsweise eines zumindest teiltransparenten Zahnmaterials die Messungen abermals ungenau beziehungsweise verfälscht.

Des weiteren ist es aus der Praxis auch bereits bekannt, mittels konfokaler Mikroskopie Oberflächen zu scannen und daraus dreidimensionale Aufnahmen der Oberfläche zu generieren. Hierzu wird lediglich beispielhaft auf J. Engelhardt und W. Knebel in "Physik in unserer Zeit", 24. Jahrg., 1993, Nr. 2, Seiten 70-78: "Konfokale Laserscanning-Mikroskopie" und D.K. Hamilton und T. Wilson in Appl. Phys. B 27, 1982, 211-213: "Three-Dimensional Surface Measurement Using the Confocal Scanning Microscope" verwiesen.

Die konfokale Mikroskopie eignet sich zur Oberflächenvermessung von Zahnoberflächen ganz besonders, da nach diesem Verfahren lediglich diejenigen Strukturen abgebildet werden, die sich unmittelbar in der Brennebene des Mikroskopobjektivs befinden. Meßfehler aufgrund des teiltransparenten Zahnmaterials sind somit wirksam vermieden. Dem heutigen Standard entsprechende konventionelle Konfokalmikroskope weisen jedoch aufgrund ihrer Universalität eine ganz erhebliche Baugröße auf, so daß sie zur polyfokalen Abbildung des Oberflächenprofils unterschiedlichster Objekte, beispielsweise zur Vermessung des Oberflächenprofils von Zähnen, aufgrund Ihrer Baugröße nicht geeignet sind. Darüber hinaus sind herkömmliche Konfokalmikroskope für zahlreiche einfache Anwendungen wie die reine Profilometrie zu kompliziert im Aufbau und daher viel zu teuer.

Der vorliegenden Erfindung liegt daher die Aufgabe zugrunde, eine Anordnung zur simultanen polyfokalen Abbildung des Oberflächenprofils beliebiger Objekte, wonach eine schnelle und dabei reproduzierbare Abtastung des Oberflächenprofils bei geringst möglichem beziehungsweise kleinstem apparativem Aufwand und unter Gewährleistung einer vertretbaren Baugröße der Anordnung möglich ist.

Die erfindungsgemäße Anordnung zur simultanen polyfokalen Abbildung des Oberflächenprofils beliebiger Objekte, insbesondere zur Vermessung des Oberflächenprofils von Zähnen, löst die voranstehende Aufgabe durch die Merkmale des Patentanspruches 1, 3, 10 oder 11.

Erfindungsgemäß ist hier erkannt worden, daß es grundsätzlich möglich ist, vom Objekt über eine Optik zurückkehrendes Licht aus unterschiedlichen Bildebenen des Objekts gleichzeitig auszukoppeln, wobei das ausgekoppelte Licht dem Detektor bzw. mehreren Detektoren zugeleitet wird. Die Auskopplung erfolgt durch einen im Detektionsstrahlengang der Optik nachgeordneten und dem Detektor vorgeordneten Strahlauskoppler, der - wie bereits gesagt - gleichzeitig an mehreren Foki des zurückkehrenden Lichts zur simultanen polyfokalen Abbildung des Oberflächenprofils des Objektes auskoppeln kann. Letztendlich erfolgt hier eine gleichzeitige Abtastung des Objekts in mehreren Fokalebenen, wobei das Oberflächenprofil des Objekts insgesamt abgescannt bzw. abgerastert wird.

In besonders vorteilhafter Weise ist der Strahlauskoppler im Detektionsstrahlengang vorzugsweise zentral angeordnet und umfaßt in den jeweiligen Brennpunkten des zurückkehrenden Lichts Umlenkmittel, die der Auskopplung des Lichts hin zu dem Detektor bzw. zu den Detektoren dienen. Im Konkreten sind die Umlenkmittel im Detektionsstrahlengang in Strahlrichtung gesehen hintereinander angeordnet, wobei die jeweils vorderen Umlenkmittel Zentralbereiche des Gesamtstrahls des zurückkehrenden Lichts für die nachfolgenden Umlenkmittel ausblenden. Ungeachtet dieser Ausblendung reicht das verbleibende Licht immer noch aus, damit an dem nächsten Umlenkmittel eine abermalige Ausblendung des zurückkehrenden Lichts - jeweils aus einer anderen Fokalebene des Objekts - stattfinden kann.

Im Rahmen einer ersten konkreten Ausgestaltungsmöglichkeit könnte der Strahlauskoppier als lichtdurchlässiger Plattenstapel mit im Detektionsstrahlengang unter einem vorgegebenen Winkel hintereinander angeordneten, als Umlenkmittel dienenden Platten ausgebildet sein. Dabei könnten die lichtdurchlässigen Platten zumindest bereichsweise mit einer Reflexionsschicht versehen sein, so daß bei entsprechender Anordnung der Reflexionsschichten - hintereinander in etwa im Zentrum des Detektionsstrahlenganges - eine gestufte Auskopplung des zurückkehrenden Lichts aus unterschiedlichen Fokalebenen erfolgt. Im Rahmen dieser Ausgestaltung ist jedenfalls wesentlich, daß die einzelnen Platten lichtdurchlässig ausgeführt sind und daß eine Reflexion bzw. Auskopplung lediglich an den zonal vorgesehenen Reflexionsschichten erfolgt.

Im Rahmen einer weiteren Ausgestaltungsmöglichkeit könnte der Strahlauskoppler als vorzugsweise monolithischer Plexiglasbaustein mit im Detektionsstrahlengang unter einem vorgegebenen Winkel vorzugsweise hintereinander angeordneten integralen Umlenkmitteln ausgeführt sein. Ein solcher Plexiglasbaustein bzw. die dort integral angeordneten Umlenkmittel könnten frästechnisch herausgearbeitet sein, wobei auf den integralen Umlenkmitteln ebenfalls Reflexionsschichten aufgebracht sind. Diese Reflexionsschichten reflektieren das zurückkehrende Licht aus unterschiedlichen Fokalebenen und koppeln das Licht entsprechend der Foki zu dem Detektor hin aus.

Ebenso wäre es denkbar, den Strahlauskoppler als Hintereinanderschaltung von Pinholes auszuführen. Das zurückkehrende Licht würde dann im Bereich eines Brennpunkts an jeweils einem Pinhole ausgeblendet werden und würde ansonsten zum nächsten Pinhole hin reflektiert werden. Der reflektierte Anteil des Lichts würde dort wiederum im Bereich eines Brennpunkts ausgeblendet und ansonsten abermals reflektiert werden. Mehrere solcher Pinholes lassen sich miteinander kommunizierend anordnen, wobei zur Reflexion des jeweils nicht ausgekoppelten Lichts unter einem vorgegebenen Winkel angeordnete, miteinander im Strahlengang kommunizierende Spiegel verwendbar sind. Diese Spiegel weisen die zur Ausblendung erforderlichen Pinholes als Durchgänge in sich auf.

Im Rahmen einer weiteren Ausgestaltungsmöglichkeit des Strahlauskopplers könnte dieser ein Gehäuse oder einen lichtleitenden Körper umfassen. Sowohl das Gehäuse als auch der lichtleitende Körper wäre mit einer optischen Öffnung im Detektionsstrahlengang des zurückkehrenden Lichts anzuordnen, damit nämlich das zurückkehrende Licht in diese optische Öffnung einfallen kann. Das einfallende Licht könnte entlang zweier einander gegenüberliegender Reflexionsflächen entsprechend dem Einfallswinkel wechselseitig reflektiert und an gegenüberliegenden Pinholes im jeweiligen Brennpunkt - aus entsprechenden Brennebenen des Objekts - zu den Detektoren hin teilausgeblendet werden. Die beiden gegenüberliegenden Reflexionsflächen könnten wiederum als Spiegelflächen mit darin ausgebildeten Pinholes ausgeführt sein.

Des weiteren wäre es möglich, die beiden gegenüberliegenden Reflexionsflächen exakt parallel zueinander auszubilden, wobei es sich bei den Reflexionsflächen grundsätzlich um Wandungen des Gehäuses oder um Oberflächen eines aus Vollmaterial bestehenden Glaskörpers oder dergleichen handeln kann.

Bei dem Gehäuse bzw. dem lichtleitenden Körper könnten sich die beiden gegenüberliegenden Reflexionsflächen von der optischen Öffnung aus ins Innere des Gehäuses bzw. des Körpers voneinander entfernen, d.h. divergieren. Insoweit würde sich der zur Ausbreitung des insoweit bereits umgelenkten Lichts zur Verfügung stehende Raum stetig oder unstetig erweitern. Eine der beiden Reflexionsflächen könnte dabei stufig ausgebildet sein, d.h. sich von der gegenüberliegenden Reflexionsfläche in Stufen entfemen. Jede der dabei entstehenden Teilflächen könnte wiederum ein Pinhole oder eine Gruppe von Pinholes zur Ausblendung in einem jeweiligen Brennpunkt aufweisen.

In den gegenüberliegenden Reflexionsflächen könnten ebenso gruppenweise Pinholes zur simultanen Farbaufspaltung vorgesehen sein. An dieser Stelle sei hervorgehoben, daß unmittelbar an den Pinholes oder im Bereich der Pinholes geeignete Detektoren zur Aufnahme des ausgeblendeten Lichts angeordnet sein können. So ließen sich auf den den Reflexionsflächen gegenüberliegenden Seiten beispielsweise Lichtleitfasern, Dioden oder sonstige optisch arbeitende Detektoren anordnen.

Der Strahlauskoppler könnte im Rahmen einer weiteren Alternative mehrere mit vorgegebenem Winkel zueinander angeordnete, miteinander kommunizierende Reflexionsflächen mit Pinholes aufweisen. Die Reflexionsflächen könnten insgesamt eine Polygonanordnung ergeben. Auch hier wird an den Pinholes in jeweiligen Brennpunkten ausgekoppelt und das ausgekoppelte Licht durch einen Detektor aufgenommen.

Der Strahlauskoppler könnte ebenso als Spaltsystem mit mehreren nebeneinanderliegenden Spalten zur parallelen Detektion der x- und z-Koordinaten des zurückkehrenden Lichts ausgebildet sein, so daß eine simultane Detektion mehrere Bildpunkte in einer Brennebene möglich ist.

Schließlich könnten als Strahlauskoppler im Detektionsstrahlengang vorzugweise zentral in den jeweiligen Brennpunkten des zurückkehrenden Lichts endende Lichtleitfasern vorgesehen sein, wobei die Lichtleitfasern das ausgekoppelte Licht einem Fotomultiplier zuführen. Wesentlich ist hier jedenfalls, daß im Strahlengang des zurückkehrenden Lichts eine in jeweiligen Brennpunkten gestaffelte Lichtauskopplung stattfindet, daß das ausgekoppelte Licht einem Detektor zugeführt wird und daß eine analoge oder digitale Signalverarbeitung, u.a. auch zur Kompensation nichtlinearer Geometrieeffekte und ggf. mit Interpolation zur höheren Auflösung, nachgeschaltet ist.

Dem Strahlauskoppler können unterschiedliche Detektoren nachgeschaltet sein, so beispielsweise singuläre Detektoren, Detektorarrays, lineare oder flächige CCDs, Dioden, Fotomultiplier, Diodenanordnungen bzw. positionssensitive Dioden, etc., wobei der Strahlauskoppler und die Detektoren in funktionaler Hinsicht und auch baugruppenmäßig kombiniert sein können.

Im Falle einer funktionalen und baugruppenmäßigen Kombination von Strahlauskoppler und Detektor könnten im Detektionsstrahlengang vorzugsweise zentral Dioden in den jeweiligen Brennpunkten des zurückkehrenden Lichts angeordnet sein, die aufgrund ihrer Hintereinanderschaltung als positionsempfindliche Dioden arbeiten.

Hinsichtlich der Beleuchtung des Objekts ist es von Vorteil, wenn es sich dabei um eine polyfokale Beleuchtung z.B. durch hohe sphärische Aberration, Zonenlinsen, etc. handelt. Jedenfalls wird das Objekt über einen vorgebbaren Fokusbereich strukturiert beleuchtet, wobei zur polyfokalen Beleuchtung beispielsweise eine Laserlichtquelle verwendet werden kann. Wie bereits zuvor erwähnt, läßt sich die polyfokale Beleuchtung durch Öffnungsfehler, Zonenlinsen, Hologramme, etc. erzeugen, wobei eine Fokussierung des Lichts auf unterschiedliche Brennebenen erfolgt. Die Oberfläche selbst kann obendrein mit Streu- oder Fluoreszenzmitteln präpariert werden, um ganz besondere Effekte im Streu- oder Reflexionslicht ausnutzen zu können.

Hinsichtlich eines erfindungsgemäßen Verfahrens wird die hier zugrundeliegende Aufgabe durch die Merkmale des Patentanspruches 27 gelöst. Danach handelt es sich hier um ein Verfahren zur simultanen polyfokalen Abbildung des Oberflächenprofils beliebiger Objekte, insbesondere zur Vermessung des Oberflächenprofils von Zähnen, mit einer Lichtquelle zur Beleuchtung des Objekts, einer Optik zur Fokussierung der von der Oberfläche des Objekts zurückkehrenden Lichtsignale, einem die Lichtsignale aufnehmenden Detektor und einem die detektierten Signale digitalisierenden und weiterverarbeitenden Prozessor, vorzugsweise zur Anwendung einer Anordnung gemäß voranstehender Beschreibung.

Das erfindungsgemäße Verfahren ist dadurch gekennzeichnet, daß das aus unterschiedlichen Bildebenen zurückkehrende Licht aus dem Detektionsstrahlengang im Bereich nach der Optik und vor dem Detektor ausgekoppelt wird und daß das ausgekoppelte Licht dem Detektor zugeleitet wird, wobei es sich bei dem Detektor um einen singulären Detektor oder um eine Detektoranordnung bzw. um einzelne Detektoren handeln kann.

Im Rahmen des erfindungsgemäßen Verfahrens ist es des weiteren von ganz besonderem Vorteil, wenn das Objekt über einen vorgebbaren Fokusbereich strukturiert beleuchtet wird, wenn nämlich eine Fokussierung des Lichts auf unterschiedliche Brennebenen am Objekt erfolgt. Im konkreten kann eine polyfokale Beleuchtung des Objekts durch Öffnungsfehler, Zonenlinsen, Hologramme oder ähnliches erzeugt werden.

Schließlich wird in weiter erfindungsgemäßer Weise die Verwendung einer erfindungsgemäßen Anordnung unter Nutzung des erfindungsgemäßen Verfahrens beansprucht, und zwar zum Lesen digitaler bzw. binärer Informationen aus mehreren Ebenen eines dreidimensionalen optischen Datenträgers. Ebenso wird eine entsprechende Verwendung zum Schreiben digitaler bzw. binärer Informationen auf mehrere Ebenen eines dreidimensionalen optischen Datenträgers beansprucht. Mit anderen Worten soll hier das Grundprinzip der polyfokalen Mikroskopie unter Zugrundelegung des hier realisierten Auskopplungs- und Detektionsprinzips einerseits zum Lesen dreidimensionaler optischer Datenspeicher und andererseits zum Schreiben in dreidimensionale optische Datenspeicher genutzt werden, wobei das hier in Rede stehende Prinzip ungeachtet der zu vermittelnden Energiebeträge anwendbar ist.

Es gibt nun verschiedene Möglichkeiten, die Lehre der vorliegenden Erfindung in vorteilhafter Weise auszugestalten und weiterzubilden. Dazu ist einerseits auf die den Patentansprüchen 1 und 27 nachgeordneten Ansprüche, andererseits auf die nachfolgende Erläuterung verschiedener Ausführungsbeispiele der Erfindung anhand der Zeichnung zu verweisen. In Verbindung mit der Erläuterung der bevorzugten Ausführungsbeispiele der Erfindung werden auch im allgemeinen bevorzugte Ausgestaltungen und Weiterbildungen der Lehre erläutert. In der Zeichnung zeigt
- Fig. 1: in einer schematischen Darstellung den grundsätzlichen Aufbau einer erfindungsgemäßen Anordnung zur simultanen polyfokalen Abbildung des Oberflächenprofils beliebiger Objekte,
- Fig. 2: in einer schematischen Darstellung die Anordnung aus Fig. 1 in einer Draufsicht,
- Fig. 3: in einer schematischen Darstellung ein Ausführungsbeispiel eines als Plattenstapel ausgebildeten Strahlauskopplers mit Detektorarray,
- Fig. 4: in einer schematischen Darstellung ein weiteres Ausführungsbeispiel eines als monolithischer Plexiglasblock ausgebildeten Strahlauskopplers nebst Detektorarray, und zwar links in einer Seitenansicht und rechts in einer Draufsicht,
- Fig. 5: in einer schematischen Darstellung eine weitere Möglichkeit zur Strahlauskopplung durch Hintereinanderschaltung von Spiegeln beziehungsweise Pinholes nebst Detektoren,
- Fig. 6: in einer schematischen Darstellung einen Strahlauskoppler mit zwei gegenüberliegenden Reflexionsflächen,
- Fig. 7: in einer schematischen Darstellung den Gegenstand aus Fig. 6 in einer Draufsicht auf die zur Strahlauskopplung dienenden Pinholes,
- Fig. 8: in einer schematischen Darstellung ein weiteres Ausführungsbeispiel eines Strahlauskopplers gemäß Fig. 6, jedoch mit divergierenden gegenüberliegenden Reflexionsflächen,
- Fig. 9: in einer schematischen Darstellung ein weiteres Ausführungsbeispiel eines Strahlauskopplers mit zwei gegenüberliegenden Reflexionsflächen, wobei eine der Reflexionsflächen stufig ausgeführt ist,
- Fig. 10: in einer schematischen Darstellung ein weiteres Ausführungsbeispiel eines Strahlauskopplers mit zwei gegenüberliegenden Reflexionsflächen, wobei gruppenweise Pinholes zur simultanen Farbaufspaltung vorgesehen sind,
- Fig. 11: in einer schematischen Darstellung ein weiteres Ausführungsbeispiel eines Strahlauskopplers mit Reflexionsflächen in Polygonanordnung,
- Fig. 12: in einer schematischen Darstellung ein als Spaltsystem ausgebildeter Strahlauskoppler,
- Fig. 13: in einer schematischen Darstellung die spaltenweise Abbildung des Objekts mittels einer 2d-Kamera oder mit Y-Scan,
- Fig. 14: in einer schematischen Darstellung ein Ausführungsbeispiel einer Anordnung zur polyfokalen Beleuchtung des Objekts und
- Fig. 15: in einer schematischen Darstellung ein weiteres Ausführungsbeispiel zur polyfokalen Beleuchtung.

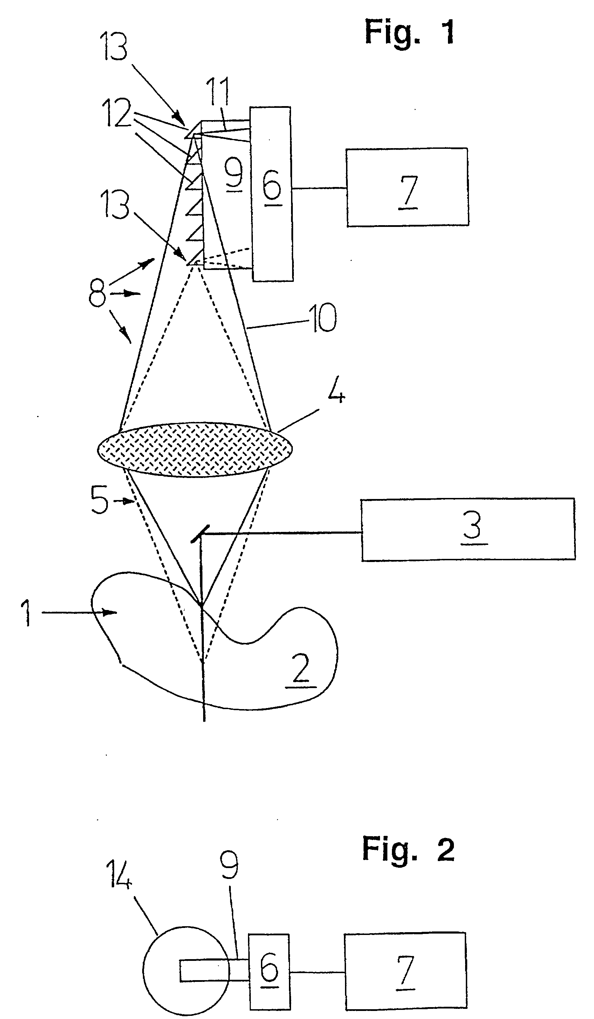

Die Fig. 1 und 2 zeigen schematisch eine Anordnung zur simultanen polyfokalen Abbildung des hier lediglich angedeuteten Oberflächenprofils 1 beliebiger Objekte 2, wobei es sich hier insbesondere um die Vermessung des Oberflächenprofils von Zähnen handelt. Die Anordnung umfaßt eine Lichtquelle 3 zur Beleuchtung des Objekts 2, eine Optik 4 zur Fokussierung der von der Oberfläche 1 des Objekts 2 zurückkehrenden Lichtsignale 5, einen die Lichtsignale 5 aufnehmenden Detektor 6 und einen die detektierten Signale digitalisierenden und weiterverarbeitenden Prozessor 7.

Erfindungsgemäß ist im Detektionsstrahlengang 8 der Optik 4 nachgeordnet und dem Detektor 6 vorgeordnet ein Strahlauskoppler 9 vorgesehen, der zum gleichzeitigen Auskoppeln des aus unterschiedlichen Bildebenen des Objekts 2 zurückkehrenden und durch die Optik 4 fokussierten Lichts 10 dient, wobei das ausgekoppelte Licht 11 dem Detektor 6 zugeleitet wird.

Fig. 1 läßt des weiteren erkennen, daß der Strahlauskoppler 9 im Detektionsstrahlengang 8 zentral angeordnete Umlenkmittel 12 in den jeweiligen Brennpunkten 13 des zurückkehrenden Lichts 10 aufweist. Die Umlenkmittel 12 sind im Detektionsstrahlengang 8 hintereinander angeordnet, wobei die jeweils vorderen Umlenkmittel 12 Zentralbereiche des in Fig. 2 schematisch dargestellten Gesamtstrahls 14 des zurückkehrenden Lichts 10 für die nachfolgenden Umlenkmittel 12 ausblenden.

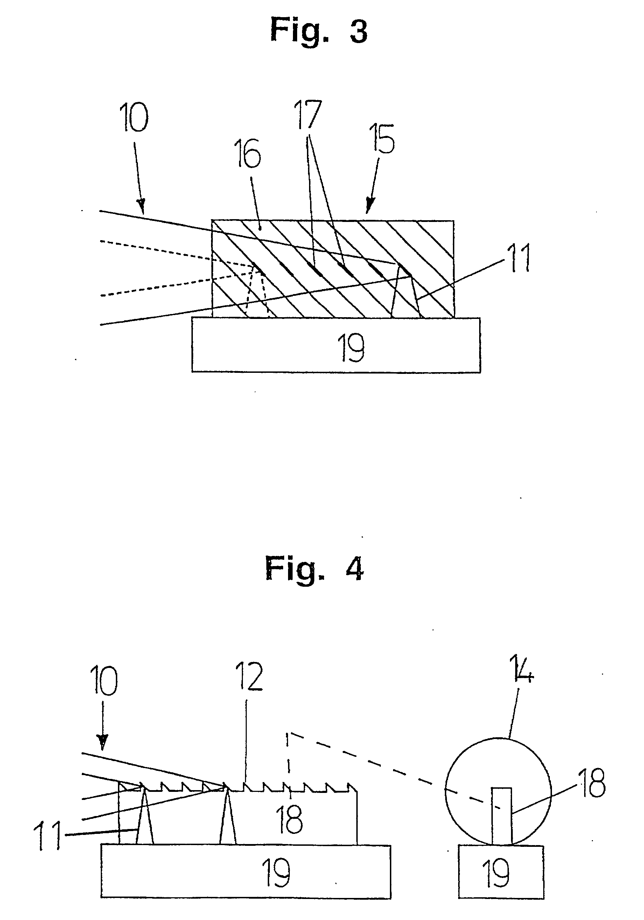

Fig. 3 zeigt ein erstes Ausführungsbeispiel eines erfindungsgemäß verwendbaren Strahlauskopplers 9, der nämlich als lichtdurchlässiger Plattenstapel 15 mit im Detektionsstrahlengang 8 unter einem vorgegebenen Winkel hintereinander angeordneten, als Umlenkmittel 12 dienenden Platten 16 ausgebildet ist. Die lichtdurchlässigen Platten 16 sind bereichsweise mit Reflexionsschichten 17 versehen, die im Detektionsstrahlengang 8 wiederum hintereinander angeordnet sind und zur Auskopplung des zurückkehrenden Lichts 10 in den jeweiligen Brennpunkten dienen.

Gemäß der Darstellung in Fig. 4 ist der Strahlauskoppler 9 als monolithischer Plexiglasbaustein 18 mit im Detektionsstrahlengang 8 unter einem vorgegebenen Winkel hintereinander angeordneten integralen Umlenkmitteln 12 ausgeführt, wobei auch diese Umlenkmittel 12 vorzugsweise mit einer in Fig. 4 nicht dargestellten Reflexionsschicht versehen sind. Sowohl dem Strahlauskoppler 9 gemäß Fig. 3 als auch dem Strahlauskoppler 9 gemäß Fig. 4 ist jeweils ein Detektorarray 19 nachgeschaltet, wobei es sich hier ebenso um positionsempfindliche Dioden handeln kann.

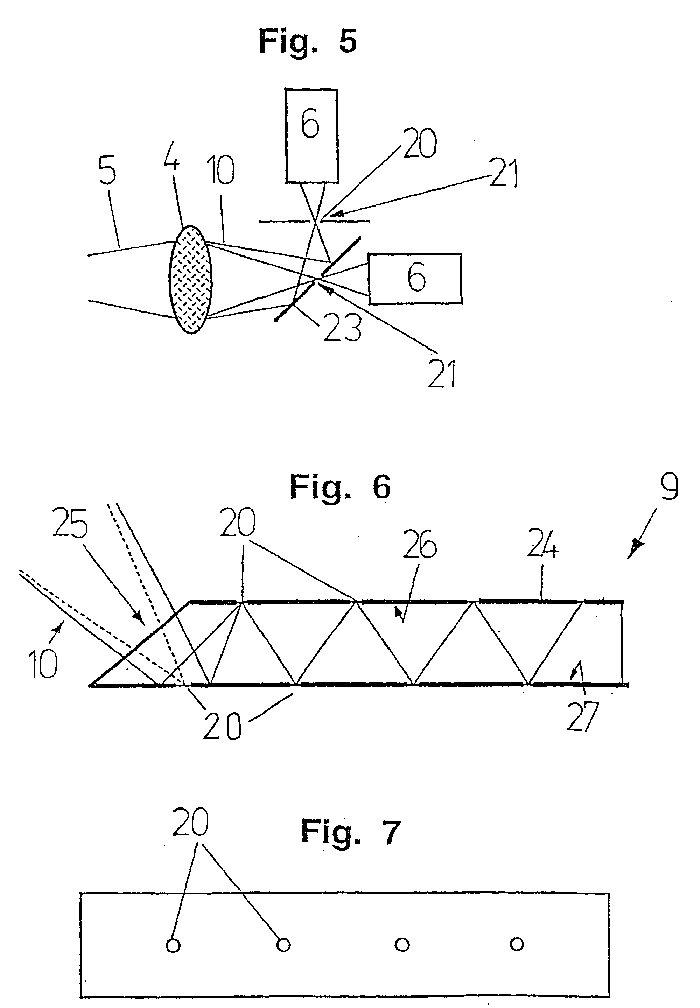

Fig. 5 zeigt ein weiteres Ausführungsbeispiel eines Strahlauskopplers 9, der nämlich als Hintereinanderschaltung von Pinholes 20 ausgeführt ist. Das zurückkehrende Licht 10 wird dabei im Bereich eines Brennpunkts 21 an einem Pinhole 20 ausgeblendet und ansonsten zum nächsten Pinhole 20 hin reflektiert. Der reflektierte Anteil des Lichts 22 wird dort wiederum im Bereich eines Brennpunkts 21 ausgeblendet und ansonsten abermals reflektiert. Dieser Vorgang kann sich mehrfach wiederholen, so daß mehrere Ausblendungen in kaskadierter Form stattfinden. Das jeweils nicht ausgekoppelte Licht wird gemäß dem hier gewählten Ausführungsbeispiel mittels miteinander kommunizierender Spiegel 23 reflektiert und an den dort ausgebildeten Pinholes 20 jeweils ausgeblendet.

Gemäß den Fig. 6 bis 10 kann der Strahlauskoppler 9 ein Gehäuse 24 oder einen lichtleitenden Körper umfassen, der eine mittig im Detektionsstrahlengang 8 anordenbare optische Öffnung 25 für das unter einem bestimmten Winkel einfallende, zurückkehrende Licht 10 aufweist. Das einfallende Licht 10 wird dabei entlang zweier einander gegenüberliegender Reflexionsflächen 26, 27 entsprechend dem Einfallswinkel wechselseitig reflektiert und an gegenüberliegenden Pinholes 20 im jeweiligen Brennpunkt 21 zu den in den Fig. 6 bis 10 nicht gezeigten Detektoren teilausgeblendet. Lediglich zur besseren Übersicht wurde hier auf eine besondere Darstellung einzelner Detektoren verzichtet.

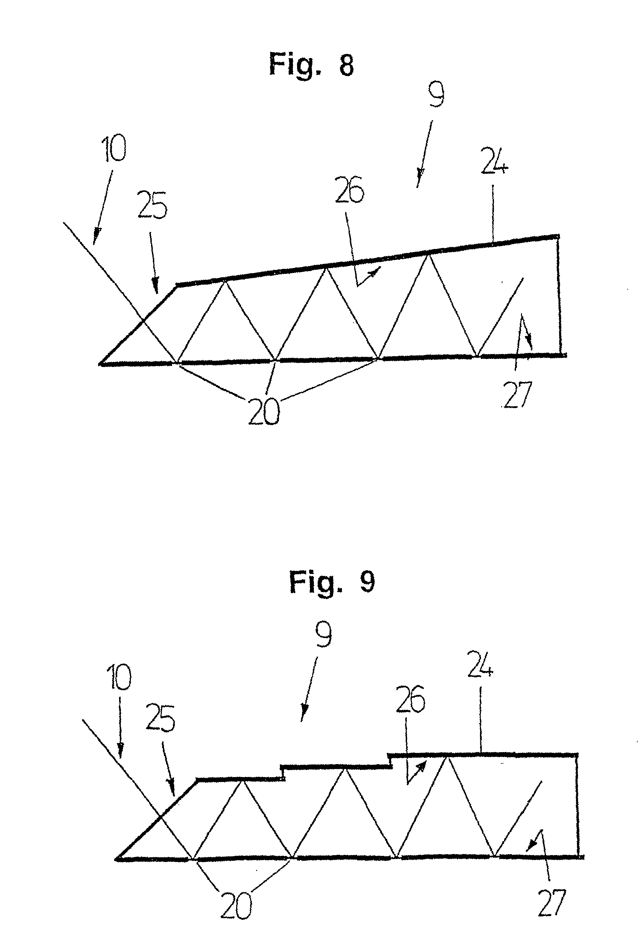

Im Konkreten sind die beiden einander gegenüberliegenden Reflexionsflächen 26, 27 als Spiegelflächen mit darin ausgebildeten Pinholes 20 ausgeführt. Gemäß dem in Fig. 6 gezeigten Ausführungsbeispiel sind die beiden gegenüberliegenden Reflexionsflächen 26, 27 parallel zueinander ausgebildet. Bei dem in Fig. 8 dargestellten Ausführungsbeispiel weist lediglich die Reflexionsfläche 27 Pinholes 20 auf und divergieren die beiden Reflexionsflächen 26, 27 von der optischen Öffnung 25 aus ins Innere des Gehäuses 24.

Bei dem in Fig. 9 dargestellten Ausführungsbeispiel ist die Reflexionsfläche 26 stufig ausgebildet und entfernt sich von der optischen Öffnung 25 ins Innere des Gehäuses 24 von der gegenüberliegenden Reflexionsfläche 27, wobei auch hier lediglich die Reflexionsfläche 27 Pinholes 20 aufweist.

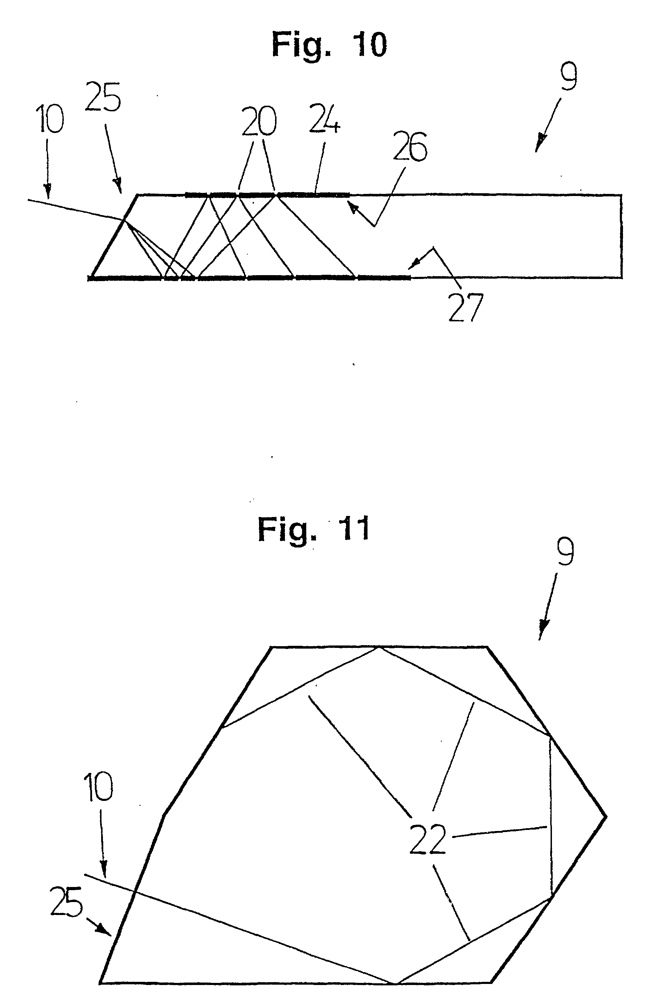

Bei dem in Fig. 10 gezeigten Ausführungsbeispiel sind in den gegenüberliegenden Reflexionsflächen 26, 27 gruppenweise Pinholes 20 zur simultanen Farbaufspaltung vorgesehen.

Gemäß der Darstellung in Fig. 11 ist der Strahlauskoppler 9 im Sinne einer Polygonanordnung ausgeführt; er weist nämlich mehrere mit vorgegebenem Winkel zueinander angeordnete, miteinander kommunizierende Reflexionsflächen 26 auf, in denen wiederum Pinholes 20 ausgebildet sind. Nicht ausgeblendetes Licht wird an den Reflexionsflächen 26 reflektiert und gelangt als reflektierter Anteil des Lichts 22 zu dem jeweils nächsten Pinhole 20.

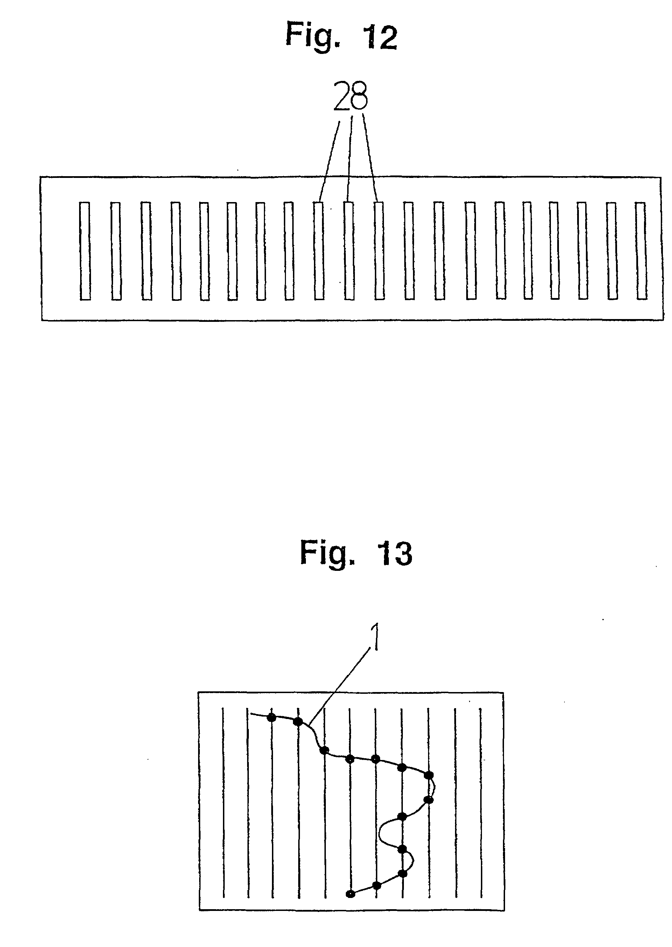

Ein weiteres Ausführungsbeispiel eines Strahlauskopplers 9 zeigt Fig. 12. Dieser Strahlauskoppler 9 ist nämlich als Spaltsystem mit mehreren nebeneinander liegenden Spalten 28 zur parallelen Detektion der x- und z-Koordinaten des zurückkehrenden Lichts ausgebildet, so daß eine simultane Detektion mehrerer Bildpunkte in einer Brennebene möglich ist.

Fig. 13 zeigt eine entsprechende Abbildung der Spalten 28 mittels einer 2d-Kamera in Realtime-Profilometrie, wobei eine solche Abbildung auch mit y-Scan erzeugt werden kann. Ein dreidimensionaler Datensatz ließe sich bei 50 Schnitten pro Sekunde (video) in etwa einer Sekunde erzeugen.

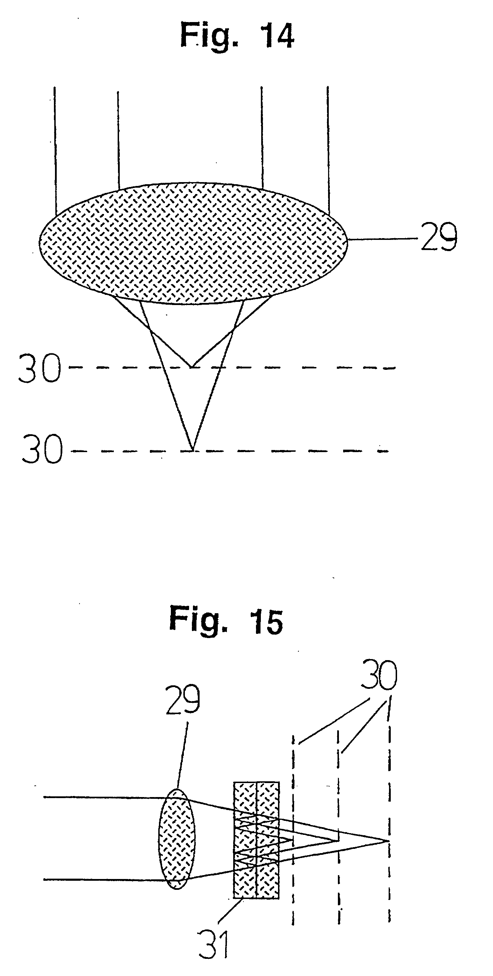

Schließlich beziehen sich die Fig. 14 und 15 auf die polyfokale Beleuchtung des Objekts 2, wozu eine Laserlichtquelle vorgesehen sein kann. Jedenfalls läßt sich die polyfokale Beleuchtung beispielsweise durch eine in Fig. 14 lediglich angedeutete Zonenlinse 29 realisieren, wobei eine Fokussierung des Lichts auf unterschiedliche Brennebenen 30 erfolgt. Fig. 15 bezieht sich ebenfalls auf die Möglichkeit einer polyfokalen Beleuchtung, bei der das Licht auf unterschiedliche Brennebenen 30 zur strukturierten Beleuchtung fokussiert wird, und zwar mittels einer Mehrfachreflexionsplatte 31, wodurch ebenfalls mehrere Brennpunkte in mehreren Brennebenen 30 erreicht werden.

### Bezugszeichenliste

- 1: Oberflächenprofil, Oberfläche
- 2: Objekt
- 3: Lichtquelle
- 4: Optik
- 5: zurückkehrendes Lichtsignal
- 6: Detektor
- 7: Prozessor
- 8: Detektionsstrahlengang
- 9: Strahlauskoppler
- 10: fokussiertes, zurückkehrendes Licht
- 11: ausgekoppeltes Licht
- 12: Umlenkmittel
- 13: Brennpunkt des zurückkehrenden Lichts
- 14: Gesamtstrahl (Fig. 2)
- 15: Plattenstapel
- 16: Platte
- 17: Reflexionsschicht
- 18: Plexiglasbaustein
- 19: Detektorarray
- 20: Pinhole
- 21: Brennpunkt
- 22: reflektierter Anteil des Lichts
- 23: Spiegel
- 24: Gehäuse
- 25: optische Öffnung
- 26: Reflexionsfläche
- 27: Reflexionsfläche
- 28: Spalt
- 29: Zonenlinse
- 30: Brennebene
- 31: Mehrfachreflexionsplatte

## Patentansprüche

1. Anordnung zur simultanen polyfokalen Abbildung des Oberflächenprofils (1) beliebiger Objekte (2), insbesondere zur Vermessung des Oberflächenprofils (1) von Zähnen, mit einer Lichtquelle (3) zur Beleuchtung des Objekts (2), einer Optik (4) zur Fokussierung der von der Oberfläche (1) des Objekts (2) zurückkehrenden Lichtsignale (5), einem die Lichtsignale (5) aufnehmenden Detektor (6) und einem die detektierten Signale digitalisierenden und weiterverarbeitenden Prozessor (7), wobei im Detektionsstrahlengang (8) der Optik (4) nachgeordnet und dem Detektor (6) vorgeordnet ein Strahlauskoppler (9) zum gleichzeitigen Auskoppeln des aus unterschiedlichen Bildebenen des Objekts (2) zurückkehrenden Lichts (10) angeordnet ist und wobei das ausgekoppelte Licht (11) dem Detektor (6) zugeleitet wird,
**dadurch gekennzeichnet, dass** der Strahlauskoppler (9) als Hintereinanderschaltung von Pinholes (20) ausgeführt ist und dass das zurückkehrende Licht (10) im Bereich eines Brennpunkts (21) an einem Pinhole (20) ausgeblendet, ansonsten zum nächsten Pinhole (20) hin reflektiert, der reflektierte Anteil des Lichts (22) dort wiederum im Bereich eines Brennpunkts (21) ausgeblendet und ansonsten abermals reflektiert wird.

2. Anordnung nach Anspruch 1, **dadurch gekennzeichnet, dass** zur Reflexion des jeweils nicht ausgekoppelten Lichts (22) unter einem vorgegebenen Winkel angeordnete, miteinander kommunizierende Spiegel (23) mit Pinholes (20) vorgesehen sind.

3. Anordnung zur simultanen polyfokalen Abbildung des Oberflächenprofils (1) beliebiger Objekte (2), insbesondere zur Vermessung des Oberflächenprofils (1) von Zähnen, mit einer Lichtquelle (3) zur Beleuchtung des Objekts (2), einer Optik (4) zur Fokussierung der von der Oberfläche (1) des Objekts (2) zurückkehrenden Lichtsignale (5), einem die Lichtsignale (5) aufnehmenden Detektor (6) und einem die detektierten Signale digitalisierenden und weiterverarbeitenden Prozessor (7), wobei im Detektionsstrahlengang (8) der Optik (4) nachgeordnet und dem Detektor (6) vorgeordnet ein Strahlauskoppler (9) zum gleichzeitigen Auskoppeln des aus unterschiedlichen Bildebenen des Objekts (2) zurückkehrenden Lichts (10) angeordnet ist und wobei das ausgekoppelte Licht (11) dem Detektor (6) zugeleitet wird, wobei
der Strahlauskoppler (9) ein Gehäuse (24) oder einen lichtleitenden Körper mit einer vorzugsweise mittig im Detektionsstrahlengang (8) anordenbaren optischen Öffnung (25) für das unter einem bestimmten Winkel einfallende, zurückkehrende Licht (10) umfasst **dadurch gekennzeichnet, dass** das einfallende Licht (10) entlang zweier einander gegenüberliegender Reflexionsflächen (26, 27) entsprechend dem Einfallswinkel wechselseitig reflektiert und an vorzugsweise gegenüberliegenden Pinholes (20) im jeweiligen Brennpunkt (21) zu Detektoren hin teilausgeblendet wird.

4. Anordnung nach Anspruch 3, **dadurch gekennzeichnet, dass** die beiden gegenüberliegenden Reflexionsflächen (26, 27) als Spiegelflächen mit darin ausgebildeten Pinholes (20) ausgeführt sind.

5. Anordnung nach Anspruch 3 oder 4, **dadurch gekennzeichnet, dass** die beiden gegenüberliegenden Reflexionsflächen (26, 27) parallel zueinander ausgebildet sind.

6. Anordnung nach Anspruch 3 oder 4, **dadurch gekennzeichnet, dass** die beiden gegenüberliegenden Reflexionsflächen (26, 27) von der optischen Öffnung (25) ins Innere des Gehäuses (24) oder Körpers divergieren.

7. Anordnung nach Anspruch 3 oder 4, **dadurch gekennzeichnet, dass** zumindest eine der beiden Reflexionsflächen (26, 27) stufig ausgebildet ist und sich dabei von der optischen Öffnung (25) ins Innere des Gehäuses (24) oder Körpers von der anderen Reflexionsfläche (26, 27) entfernt.

8. Anordnung nach Anspruch 7, **dadurch gekennzeichnet, dass** die stufige Reflexionsfläche (26, 27) im Bereich jeder Teilfläche ein Pinhole (20) aufweist.

9. Anordnung nach Anspruch 3 oder 4, **dadurch gekennzeichnet, dass** in den gegenüberliegenden Reflexionsflächen (26, 27) gruppenweise Pinholes (20) zur simultanen Farbaufspaltung vorgesehen sind.

10. Anordnung zur simultanen polyfokalen Abbildung des Oberflächenprofils (1) beliebiger Objekte (2), insbesondere zur Vermessung des Oberflächenprofils (1) von Zähnen, mit einer Lichtquelle (3) zur Beleuchtung des Objekts (2), einer Optik (4) zur Fokussierung der von der Oberfläche (1) des Objekts (2) zurückkehrenden Lichtsignale (5), einem die Lichtsignale (5) aufnehmenden Detektor (6) und einem die detektierten Signale digitalisierenden und weiterverarbeitenden Prozessor (7), wobei im Detektionsstrahlengang (8) der Optik (4) nachgeordnet und dem Detektor (6) vorgeordnet ein Strahlauskoppler (9) zum gleichzeitigen Auskoppeln des aus unterschiedlichen Bildebenen des Objekts (2) zurückkehrenden Lichts (10) angeordnet ist und wobei das ausgekoppelte Licht (11) dem Detektor (6) zugeleitet wird,
**dadurch gekennzeichnet, dass** der Strahlauskoppler (9) mehrere mit vorgegebenem Winkel zueinander angeordnete, miteinander kommunizierende Reflexionsflächen (26) mit Pinholes (20) aufweist und vorzugsweise im Sinne einer Polygonanordnung ausgeführt ist.

11. Anordnung zur simultanen polyfokalen Abbildung des Oberflächenprofils (1) beliebiger Objekte (2), insbesondere zur Vermessung des Oberflächenprofils (1) von Zähnen, mit einer Lichtquelle (3) zur Beleuchtung des Objekts (2), einer Optik (4) zur Fokussierung der von der Oberfläche (1) des Objekts (2) zurückkehrenden Lichtsignale (5), einem die Lichtsignale (5) aufnehmenden Detektor (6) und einem die detektierten Signale digitalisierenden und weiterverarbeitenden Prozessor (7), wobei im Detektionsstrahlengang (8) der Optik (4) nachgeordnet und dem Detektor (6) vorgeordnet ein Strahlauskoppler (9) zum gleichzeitigen Auskoppeln des aus unterschiedlichen Bildebenen des Objekts (2) zurückkehrenden Lichts (10) angeordnet ist und wobei das ausgekoppelte Licht (11) dem Detektor (6) zugeleitet wird,
**dadurch gekennzeichnet, dass** der Strahlauskoppler (9) als Spaltsystem mit mehreren nebeneinander liegenden Spalten (28) zur parallelen Detektion der x- und z-Koordinaten des rückkehrenden Lichts (10) ausgebildet ist, so dass eine simultane Detektion mehrerer Bildpunkte in einer Brennebene (30) möglich ist.

12. Anordnung nach einem der Ansprüche 1 bis 11, **dadurch gekennzeichnet, dass** als Strahlauskoppler (9) im Detektionsstrahlengang (8) vorzugsweise zentral in den jeweiligen Brennpunkten (13) des zurückkehrenden Lichts (10) endende Lichtleitfasern vorgesehen sind.

13. Anordnung nach Anspruch 12, **dadurch gekennzeichnet, dass** die Lichtleitfasem das ausgekoppelte Licht (11) einem Fotomultiplier zuführen.

14. Anordnung nach einem der Ansprüche 1 bis 12, **dadurch gekennzeichnet, dass** dem Strahlauskoppler (9) ein Detektorarray (19) nachgeschaltet ist.

15. Anordnung nach einem der Ansprüche 1 bis 12, **dadurch gekennzeichnet, dass** dem Strahlauskoppler (9) Dioden nachgeschaltet sind.

16. Anordnung nach einem der Ansprüche 1 bis 12, **dadurch gekennzeichnet, dass** als Strahlauskoppler (9) und Detektor im Detektionsstrahlengang (8) vorzugsweise zentral angeordnete Dioden in den jeweiligen Brennpunkten des zurückkehrenden Lichts (10) vorgesehen sind, die als positionsempfindliche Dioden arbeiten.

17. Anordnung nach einem der Ansprüche 1 bis 16, **dadurch gekennzeichnet, dass** das Objekt (2) im wesentlichen über einen vorgebbaren Fokusbereich strukturiert beleuchtbar ist.

18. Anordnung nach einem der Ansprüche 1 bis 17, **dadurch gekennzeichnet, dass** zur polyfokalen Beleuchtung eine Laserlichtquelle vorgesehen ist.

19. Anordnung nach einem der Ansprüche 1 bis 18, **dadurch gekennzeichnet, dass** die polyfokale Beleuchtung durch Öffnungsfehler, Zonenlinsen (29), Hologramme, etc. erzeugt wird, wobei eine Fokussierung des Lichts auf unterschiedliche Brennebenen (30) erfolgt.

## Claims

1. Arrangement for the simultaneous polyfocal representation of the surface profile (1) of any objects (2), in particular for measuring the surface profile (1) of teeth, having a light source (3) for illuminating the object (2), an optical unit (4) for focusing the light signals (5) which are reflected by the surface (1) of the object (2), a detector (6) which receives the light signals (5) and a processor (7), which digitises and further processes the signals detected, wherein a beam decoupler (9) for the simultaneous decoupling of the light (10) which is reflected from various focal planes of the object (2) is arranged in the detection beam path (8) downstream of the optical unit (4) and upstream of the detector (6) and wherein the decoupled light (11) is supplied to the detector (6), **characterised in that** the beam decoupler (9) is in the form of a successive arrangement of pinholes (20), and **in that** the reflected light (10) is masked in the region of a focal point (21) at a pinhole (20), and is otherwise reflected towards the next pinhole (20), the reflected portion of the light (22) is again masked at that point in the region of a focal point (21) and is otherwise reflected once more.

2. Arrangement according to claim 1, **characterised in that** there are provided, in order to reflect the non-decoupled light (22), mirrors (23) which are arranged at a predetermined angle, which communicate with each other and which have pinholes (20).

3. Arrangement for the simultaneous polyfocal representation of the surface profile (1) of any objects (2), in particular for measuring the surface profile (1) of teeth, having a light source (3) for illuminating the object (2), an optical unit (4) for focusing the light signals (5) which are reflected by the surface (1) of the object (2), a detector (6) which receives the light signals (5) and a processor (7), which digitises and further processes the signals detected, wherein a beam decoupler (9) for the simultaneous decoupling of the light (10) which is reflected back from various focal planes of the object (2) is arranged in the detection beam path (8) downstream of the optical unit (4) and upstream of the detector (6), wherein the decoupled light (11) is supplied to the detector (6) and wherein the beam decoupler (9) comprises a housing (24) or a light-conducting element having an optical opening (25), which can preferably be arranged centrally in the detection beam path (8), for the reflected light (10), which is incident at a specific angle, **characterised in that** the incident light (10) is reflected at alternate sides depending on the angle of incidence along two mutually opposing reflective faces (26, 27) and is partially masked at preferably opposing pinholes (20) at the focal point (21) relative to detectors.

4. Arrangement according to claim 3, **characterised in that** the two opposing reflective faces (26, 27) are in the form of mirror faces having pinholes (20) formed therein.

5. Arrangement according to claim 3 or claim 4, **characterised in that** the two opposing reflective faces (26, 27) are arranged parallel with each other.

6. Arrangement according to claim 3 or claim 4, **characterised in that** the two opposing reflective faces (26, 27) diverge from the optical opening (25) into the inside of the housing (24) or element.

7. Arrangement according to claim 3 or claim 4, **characterised in that** at least one of the two reflective faces (26, 27) is step-shaped and increases in distance from the other reflective face (26, 27) from the optical opening (25) into the inside of the housing (24) or element.

8. Arrangement according to claim 7, **characterised in that** the stepped reflective face (26, 27) has a pinhole (20) in the region of each partial face.

9. Arrangement according to claim 3 or claim 4, **characterised in that** pinholes (20) for the simultaneous colour separating process are provided in groups in the opposing reflective faces (26, 27).

10. Arrangement for the simultaneous polyfocal representation of the surface profile (1) of any objects (2), in particular for measuring the surface profile (1) of teeth, having a light source (3) for illuminating the object (2), an optical unit (4) for focusing the light signals (5) which are reflected by the surface (1) of the object (2), a detector (6) which receives the light signals (5) and a processor (7) which digitises and further processes the signals detected, wherein a beam decoupler (9) for the simultaneous decoupling of the light (10) which is reflected back from various focal planes of the object (2) is arranged in the detection beam path (8) downstream of the optical unit (4) and upstream of the detector (6) and wherein the decoupled light (11) is supplied to the detector (6), **characterised in that** the beam decoupler (9) has several reflective faces (26) which are arranged at a specific angle to each other, which communicate with each other and which have pinholes (20), and is preferably arranged in the manner of a polygon arrangement.

11. Arrangement for the simultaneous polyfocal representation of the surface profile (1) of any objects (2), in particular for measuring the surface profile (1) of teeth, having a light source (3) for illuminating the object (2), an optical unit (4) for focusing the light signals (5) which are reflected by the surface (1) of the object (2), a detector (6) which receives the light signals (5) and a processor (7) which digitises and further processes the signals detected, wherein a beam decoupler (9) for the simultaneous decoupling of the light (10) which is reflected from various focal planes of the object (2) is arranged in the detection beam path (8) downstream of the optical unit (4) and upstream of the detector (6) and wherein the decoupled light (11) is supplied to the detector (6), **characterised in that** the beam decoupler (9) is in the form of a splitting system having several mutually adjacent openings (28) for the parallel detection of the x and z co-ordinates of the reflected light (10) so that simultaneous detection of several focal points is possible in one focal plane (30).

12. Arrangement according to any one of claims 1 to 11, **characterised in that** there are provided as beam decouplers (9) in the detection beam path (8) light guides which terminate preferably centrally in the respective focal points (13) of the reflected light (10).

13. Arrangement according to claim 12, **characterised in that** the light guides direct the decoupled light (11) to a photoelectric multiplier.

14. Arrangement according to any one of claims 1 to 12, **characterised in that** a detector array (19) is connected downstream of the beam decoupler (9).

15. Arrangement according to any one of claims 1 to 12, **characterised in that** diodes are connected downstream of the beam decoupler (9).

16. Arrangement according to any one of claims 1 to 12, **characterised in that** there are provided, as beam decouplers (9) and detectors in the detection beam path (8), diodes which are preferably arranged centrally in the respective focal points of the reflected light (10) and which function as position-sensitive diodes.

17. Arrangement according to any one of claims 1 to 16, **characterised in that** the object (2) can be illuminated in a structured manner substantially over a predeterminable focal range.

18. Arrangement according to any one of claims 1 to 17, **characterised in that** a laser light source is provided for the polyfocal illumination.

19. Arrangement according to any one of claims 1 to 18, **characterised in that** the polyfocal illumination is produced by spherical aberrations, zoned lenses (29), holograms, etc., focusing of the light being effected on different focal planes (30).

## Revendications

1. Dispositif pour la représentation polyfocale simultanée du profil superficiel (1) d'objets (2) quelconques, en particulier pour le mesurage du profil superficiel (1) de dents, avec une source lumineuse (3) pour l'éclairage de l'objet (2), une optique (4) pour la focalisation des signaux lumineux (5) de retour de la surface (1) de l'objet (2), un détecteur (6) recueillant les signaux lumineux (5) et un processeur (7) numérisant et traitant ultérieurement les signaux détectés, un découpleur de faisceau (9) étant disposé, dans la marche des rayons de détection (8), après l'optique (4) et avant le détecteur (6), pour le découplage simultané de la lumière (10) de retour de plans d'image de l'objet (2) différents et la lumière (11) découplée étant amenée au détecteur (6),
**caractérisé en ce que** le découpleur de faisceau (9) est réalisé sous forme d'un montage les uns derrière les autres de trous d'épingle (20) et que la lumière (10) de retour est diaphragmée dans la zone d'un foyer (21) à un trou d'épingle (20), réfléchie en outre en direction du trou d'épingle (20) le plus proche, la partie réfléchie de la lumière (22) y est à nouveau diaphragmée dans la zone d'un foyer (21) et en outre à nouveau réfléchie.

2. Dispositif selon la revendication 1,
**caractérisé en ce que** des miroirs (23) avec des trous d'épingle (20), disposés selon un angle prédéterminé, communiquant les uns avec les autres sont prévus pour la réflexion de la lumière (22) respectivement non découplée.

3. Dispositif pour la représentation polyfocale simultanée du profil superficiel (1) d'objets (2) quelconques, en particulier pour le mesurage du profil superficiel (1) de dents, avec une source lumineuse (3) pour l'éclairage de l'objet (2), une optique (4) pour la focalisation des signaux lumineux (5) de retour de la surface (1) de l'objet (2), un détecteur (6) recueillant les signaux lumineux (5) et un processeur (7) numérisant et traitant ultérieurement les signaux détectés, un découpleur de faisceau (9) étant disposé, dans la marche des rayons de détection (8), après l'optique (4) et avant le détecteur (6), pour le découplage simultané de la lumière (10) de retour de plans d'image de l'objet (2) différents et la lumière (11) découplée étant amenée au détecteur (6), le découpleur de faisceau (9) comprenant un boîtier (24) ou un corps conducteur de la lumière, avec une ouverture optique (25) pouvant être disposée, de préférence centralement, dans la marche des rayons de détection (8) pour la lumière (10) incidente de retour sous un angle déterminé,
**caractérisé en ce que** la lumière incidente (10) est réfléchie alternativement, en correspondance de l'angle d'incidence, le long de deux surfaces réfléchissantes (26, 27) disposées en face l'une de l'autre et est partiellement diaphragmée en direction de trous d'épingle (20), de préférence disposés opposés, au foyer (21) respectif.

4. Dispositif selon la revendication 3,
**caractérisé en ce que** les deux surfaces réfléchissantes (26, 27) disposées opposées sont réalisées sous forme de surfaces de miroir avec des trous d'épingle (20) formés dedans.

5. Dispositif selon la revendication 3 ou 4,
**caractérisé en ce que** les deux surfaces réfléchissantes (26, 27) disposées opposées sont réalisées parallèles entre elles.

6. Dispositif selon la revendication 3 ou 4,
**caractérisé en ce que** les deux surfaces réfléchissantes (26, 27) disposées opposées divergent depuis l'ouverture optique (25) dans l'intérieur du boîtier (24) ou du corps.

7. Dispositif selon la revendication 3 ou 4,
**caractérisé en ce qu'**au moins une des surfaces réfléchissantes (26, 27) est réalisée étagée et en outre s'écarte de l'autre surface réfléchissante (26, 27) depuis l'ouverture optique (25) dans l'intérieur du boîtier (24) ou du corps.

8. Dispositif selon la revendication 7,
**caractérisé en ce que** la surface réfléchissante (26, 27) étagée présente un trou d'épingle (20) dans la zone de chaque surface partielle.

9. Dispositif selon la revendication 3 ou 4,
**caractérisé en ce que** des trous d'épingle (20) disposés par groupe sont prévus dans les surfaces réfléchissantes (26, 27) opposées pour le dédoublement simultané de couleur.

10. Dispositif pour la représentation polyfocale simultanée du profil superficiel (1) d'objets (2) quelconques, en particulier pour le mesurage du profil superficiel (1) de dents, avec une source lumineuse (3) pour l'éclairage de l'objet (2), une optique (4) pour la focalisation des signaux lumineux (5) de retour de la surface (1) de l'objet (2), un détecteur (6) recueillant les signaux lumineux (5) et un processeur (7) numérisant et traitant ultérieurement les signaux détectés, un découpleur de faisceau (9) étant disposé, dans la marche des rayons de détection (8), après l'optique (4) et avant le détecteur (6), pour le découplage simultané de la lumière (10) de retour de plans d'image de l'objet (2) différents et la lumière (11) découplée étant amenée au détecteur (6),
**caractérisé en ce que** le découpleur de faisceau (9) présente plusieurs surfaces réfléchissantes (26) avec des trous d'épingle (20), disposées selon un angle prédéterminé les unes par rapport aux autres, communiquant les unes avec les autres et est réalisé de préférence dans le sens d'une disposition polygonale.

11. Dispositif pour la représentation polyfocale simultanée du profil superficiel (1) d'objets (2) quelconques, en particulier pour le mesurage du profil superficiel (1) de dents, avec une source lumineuse (3) pour l'éclairage de l'objet (2), une optique (4) pour la focalisation des signaux lumineux (5) de retour de la surface (1) de l'objet (2), un détecteur (6) recueillant les signaux lumineux (5) et un processeur (7) numérisant et traitant ultérieurement les signaux détectés, un découpleur de faisceau (9) étant disposé, dans la marche des rayons de détection (8), après l'optique (4) et avant le détecteur (6), pour le découplage simultané de la lumière (10) de retour de plans d'image de l'objet (2) différents et la lumière (11) découplée étant amenée au détecteur (6),
**caractérisé en ce que** le découpleur de faisceau (9) est réalisé sous forme d'un système à fentes avec plusieurs fentes (28) disposées côte à côte pour la détection parallèle des coordonnées x et y de la lumière (10) de retour, de telle manière qu'une détection simultanée de plusieurs points-images dans le plan focal (30) est possible.

12. Dispositif selon l'une des revendications 1 à 11,
**caractérisé en ce que** des fibres optiques, se terminant, de préférence centralement, aux points focaux (13) respectifs sont prévus en tant que découpleur de faisceau (9) dans la marche des rayons de détection (8).

13. Dispositif selon la revendication 12,
**caractérisé en ce que** les fibres optiques amènent la lumière (11) découplée à un photomultiplicateur.

14. Dispositif selon l'une des revendications 1 à 12,
**caractérisé en ce qu'**un arrangement détecteur (19) est intercalé après le découpleur de faisceau (9).

15. Dispositif selon l'une des revendications 1 à 12,
**caractérisé en ce que** des diodes sont intercalées après le découpleur de faisceau (9).

16. Dispositif selon l'une des revendications 1 à 12,
**caractérisé en ce que** des diodes, disposées de préférence centralement dans la marche des rayons de réflexion (8), sont prévues en tant que découpleur de faisceau (9) et détecteur aux points focaux respectifs de la lumière (10) de retour et travaillent en tant de diodes sensibles à la position.

17. Dispositif selon l'une des revendications 1 à 16,
**caractérisé en ce que** l'objet (2) peut être éclairé de manière structurée essentiellement sur une zone focale prédéterminable.

18. Dispositif selon l'une des revendications 1 à 17,
**caractérisé en ce qu'**une source de lumière laser est prévue pour un éclairage polyfocal.

19. Dispositif selon l'une des revendications 1 à 18,
**caractérisé en ce que** l'éclairage polyfocal est engendré par des défauts d'ouverture, des lentilles de Fresnel (29), des hologrammes, etc., une focalisation de la lumière se produisant sur des plans focaux (30) différents.
